# EUROPÄISCHE PATENTANMELDUNG

(11) **EP 3 239 205 A1**
(43) Veröffentlichungstag der Anmeldung: **01.11.2017**
(21) Anmeldenummer: 16167201.9
(22) Anmeldetag: 27.04.2016
(51) Int. Cl.: C08G 59/16, C09D 163/00, C09D 183/00, C08G 77/20

(54) **STRAHLUNGSHÄRTBARE SILIKON-EPOXIDHARZE**

(71) Anmelder: Evonik Degussa GmbH, 45128 Essen (DE)
(72) Erfinder: HINZMANN, Dirk, 50259 Pulheim (DE); MERKULOV, Alexey, 45772 Marl (DE); JAEHNIKE, Felix, Bochum (DE); PHAM, Duy Vu, 46149 Oberhausen (DE)

(57) **Zusammenfassung**

Die Erfindung offenbart strahlungshärtbare Silikon-Epoxidharze, Beschichtungszusammensetzungen, welche diese Harze aufweisen und die Verwendung dieser Beschichtungszusammensetzungen zur Erstellung von Schutz- oder Dielektrikumsschichten in Halbleiterelementen.

## Beschreibung

Die vorliegende Erfindung betrifft neue Silikon-Epoxidharze, die zur Erstellung von Schutzschichten insbesondere für Halbleiterschichtaufbauten geeignet sind, sie enthaltende Beschichtungszusammensetzungen und ihre Verwendung.

Die moderne Halbleiter- und Displayindustrie strebt nach der Vereinfachung von Prozessen, um die einzelnen in ihren jeweiligen Bauteilen enthaltenen elektronischen Bauteilschichten kostengünstiger und zugänglicher zu machen. Aus diesem Grund befasst sie sich intensiv mit verschiedenen Verfahren, mit denen die jeweiligen elektronischen Bauteilschichten hergestellt werden können. Von besonderem Interesse sind dabei vor allem Verfahren zum Aufbringen von Schichten aus der Gas- oder Flüssigphase.

Unabhängig von ihrem Herstellverfahren ist es jedoch auch essentiell, die jeweiligen aufgebrachten funktionellen Schichten vor nachfolgender mechanischer oder chemischer Einwirkung (z.B. bei der Reinigung oder durch strukturierende Ätzmittel) schützen zu können. Von großer Bedeutung ist es auch, die jeweiligen funktionellen Schichten vor einer ungewünschten Wechselwirkung mit weiteren Schichten oder der Atmosphäre zu schützen. Schließlich ist es sehr gewünscht, die funktionellen Schichten zur Vermittlung einer hohen thermischen Stabilität mit einer Schutzschicht zu versehen, damit die funktionellen Schichten bei der Weiterverarbeitung auch Temperaturen von bis zu 400 °C ausgesetzt werden können. Je nach der gewünschten Funktion werden solche Schutzschichten unterschiedlich bezeichnet, z.B. als Passivation Layer oder Etch Stop Layer. In der Regel ist es jedoch gewünscht, dass die Schutzschichten alle zuvor genannten Anforderungen erfüllen.

Als Materialien werden zurzeit im Stand der Technik harte Silicium-haltige Schichten eingesetzt, insbesondere Schichten aus Siliciumoxid, Siliciumnitrid und Siliciumcarbid. Diese werden jedoch bislang oft aufwändig über Vakuumtechniken wie CVD oder PVD aufgetragen. Damit die Schutzschichten weiterhin selbst strukturiert vorliegen, müssen sie nachfolgend aufwändig lithographisch mittels Trockenätzverfahren strukturiert werden. Entsprechend sucht die Industrie nach Prozessen und dabei einsetzbaren neuen Materialien, um einfacher entsprechende Schutzschichten herstellen zu können.

JP S59-081369 A beschreibt Schutzschichten, die aus Beschichtungszusammensetzungen enthaltend Silikon-modifizierte Epoxyharze hergestellt werden können. Nachteilig an den dort beschriebenen Epoxyharzen ist jedoch, dass ihnen konventionelle Quervernetzer wie Phenol-Novolake, Melaminharze, Phtalsäure-Anhydride, Amine oder BF₃/Amin-Komplexe zugesetzt werden müssen.

EP 0 263 237 A2 offenbart Silikon-modifizierte Epoxidharze, die durch Umsetzung von Doppelbindungen enthaltenden Epoxyharzen mit Doppelbindungen enthaltenden Silikonen in Gegenwart eines Radikalstarters hergestellt werden können. Bei den resultierenden Epoxyharzen handelt es sich um ausschließlich thermoplastische Beschichtungen. Da ausschließlich lineare Polydimethylsiloxane eingesetzt werden, sind die resultierenden Beschichtungsmassen weiterhin aufgrund ihres geringen Vernetzungsgrades thermisch wenig stabil.

Von Interesse sind somit einfacher auszuhärtende Beschichtungszusammensetzungen mit besseren Eigenschaften. Insbesondere von Interesse sind strahlungshärtende Beschichtungszusammensetzungen, da diese den Vorteil haben, besonders einfach durch Bestrahlen strukturiert werden zu können.

EP 0 617 094 A1 offenbart zum Beispiel Beschichtungsmassen umfassend Organopolysiloxane mit (Meth)Acrylsäureestergruppen, die aufgrund der enthaltenen (Meth)Acrylatgruppen strahlungshärtbar sind. Die beschriebenen Organopolysiloxane sind jedoch aufgrund einer unzureichenden chemischen Beständigkeit, z.B. gegenüber Ätzmitteln, nachteilig.

DE 38 20 294 C1 offenbart strahlungshärtende Polysiloxane, die aus Polysiloxanen mit über SiC-Bindungen angebundene Epoxygruppen und nachfolgende vollständige Umsetzung der Epoxygruppen mit (Meth)Acrylsäure und Monocarbonsäuren ohne Doppelbindungen herstellbar sind. Die eingesetzten Polysiloxane können zum Beispiel über Addition von Allylepoxypropylether an α,ω-Wasserstoffdimethylpolysiloxan hergestellt werden. Von entsprechenden Polysiloxanen mit über eine Si-C-Bindung angebundenen Epoxygruppen abgeleitete strahlungshärtende Polysiloxane haben jedoch den Nachteil dass, sie keine ausreichende chemische Beständigkeit, z.B. gegenüber Ätzmitteln, aufweisen. Unter Ätzmitteln im Sinne der vorliegenden Erfindung werden Stoffe verstanden, welche die Oberfläche des zu ätzenden Materials in einer chemischen Reaktion verändern, beispielsweise durch Oxidation, und so in Lösung bringen. Ätzmittel können Säuren, Basen oder oxydierend wirkende Stoffe sein.

EP 0 281 681 B1 offenbart ebenfalls strahlungshärtende Polysiloxane mit über SiC-Gruppen gebundenen (Meth-)Acrylsäureestergruppen. Auch diese Polysiloxane haben jedoch wegen der Anbindung der (Meth)Acrylatgruppen über SiC-Bindungen den Nachteil, dass sie ebenfalls keine ausreichende chemische Beständigkeit, z.B. gegenüber Ätzmitteln, aufweisen.

Es stellt sich somit vorliegend die Aufgabe, die zuvor beschriebenen Nachteile des Stands der Technik zu überwinden. Insbesondere stellt sich die Aufgabe, besonders einfach strukturierbare Beschichtungsmassen bereitzustellen, mit denen Schichten, die Halbleiterbauteilschichten oder ganze Halbleiterbauteile besonders gut vor mechanischer, chemischer und/oder thermischer Einwirkung sowie Wechselwirkung mit weiteren Schichten und/oder der Atmosphäre schützen, bereitzustellen.

Die gestellte Aufgabe wird vorliegend gelöst durch die erfindungsgemäßen strahlungshärtbaren Silikon-Epoxidharze, die herstellbar sind durch Polykondensation mindestens eines alkoxyfunktionellen Silikonharzes mit mindestens einem Teil der primären oder sekundären Hydroxylgruppen eines cycloaliphatischen oder aromatischen Epoxidharzes und nachfolgende Umsetzung nicht umgesetzter Oxirangruppen von an das Silikonharz angebundenem Epoxidharz mit mindestens einer ungesättigten Carbonsäure.

Unter einem strahlungshärtbaren Silikon-Epoxidharz wird im Rahmen der vorliegenden Erfindung ein mit elektromagnetischer Strahlung, bevorzugt mit UV-Strahlung der Wellenlänge 100 bis 380 nm, härtbares Harz verstanden.

Bei den alkoxyfunktionellen Silikonharzen handelt es sich vorzugsweise um Alkoxy- und ggf. Silanol-funktionelle Polysiloxane. Vorzugsweise handelt es sich bei den Silikonharzen um nichtlineare, verzweigte, Alkoxy-funktionelle und ggf. Silanol-funktionelle Polysiloxane, bevorzugt jene der allgemeinen Formel (I), 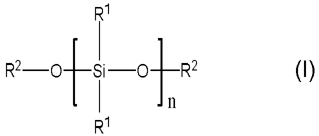 worin R¹ unabhängig voneinander eine Alkyl-, Aryl-, Alkoxy-, Hydroxy- oder -OSi(R³)₃-Gruppe sein kann, wobei R³ unabhängig voneinander eine Alkyl-, Aryl-, Alkoxy- oder Hydroxy-Gruppe sein kann, und wobei R² unabhängig voneinander Wasserstoff oder eine Alkyl- oder Arylgruppe sein kann, bevorzugt eine Alkylgruppe, ganz besonders bevorzugt eine Methylgruppe oder Ethylgruppe, und n > 1 ist.

Bevorzugt beträgt das zahlenmittlere Molekulargewicht Mₙ des alkoxyfunktionellen und ggf. Silanol-funktionellen Polysiloxans zwischen 300 bis 5100 g/mol, vorzugweise 400 bis 3000 g/mol, ganz besonders bevorzugt 450 bis 1800 g/mol. Die Bestimmung erfolgt mittels Gelpermeationschromatographie (GPC), wie nachfolgend unter den verwendeten Methoden offenbart.

Bevorzugt als R¹, R² und R³ geeignete Alkylreste sind lineare oder verzweigte Alkylreste mit 1 bis 18 C-Atomen, d.h. C₁-C₁₈-Alkylreste. Besonders bevorzugte Reste R¹, R² und R³ sind -CH₃- und -CH₂CH₃-Reste, d.h. Methyl- und Ethylgruppen.

Bevorzugt als R¹, R² und R³ geeignete Arylreste sind solche mit 6 bis 18 C-Atomen, d.h. C₆-C₁₈-Arylreste. Besonders bevorzugt sind -C₆H₅-Reste, d.h. Phenylgruppen.

Bevorzugt als R¹ und R³ geeignete Alkoxygruppen sind lineare oder verzweigte Alkoxygruppen mit 1 bis 18 C-Atomen, d.h. C₁-C₁₈-Alkoxyreste. Besonders bevorzugte Reste sind -OCH₃ und-OCH₂CH₃, d.h. Methoxygruppen und Ethoxygruppen.

In Formel (I) beträgt n > 1, das heißt das alkoxyfunktionelle und ggf. Silanol-funktionelle Polysiloxan weist mindestens zwei -Si(R¹)₂-O-Einheiten auf, bevorzugt ist n = 4 - 70.

Bevorzugt handelt es sich bei den bevorzugt eingesetzten Alkoxy-funktionellen und ggf. Silanol-funktionellen Polysiloxanen gemäß Formel (I) um solche mit R¹ = -CH₃ und/oder -C₆H₅ und somit um Phenyl-Methylpolysiloxane, wobei methoxyfunktionelle oder ethoxyfunktionelle Phenyl-Methylpolysiloxane, d.h. solche mit und R² = -CH₃ und/oder -C₂H₅ besonders bevorzugt sind, da sie kommerziell erhältlich sind und bereits bei Raumtemperatur ≈ 25° C hinreichend schnell zu Aushärtung gebracht werden können.

Bevorzugt beträgt der Alkoxygehalt des Alkoxy- und ggf. Silanol-funktionellen Silikonharzes zwischen 5 und 30 Gew.-%, bevorzugt zwischen 8 und 25 Gew.-%, ganz besonders bevorzugt zwischen 10 und 20 Gew.-%, jeweils bezogen auf die Gesamtmasse an strahlungshärtbaren Silikon-Epoxidharz. Die Bestimmung erfolgt über ¹H- oder ¹³C-NMR-spektroskopische Messungen. Höhere Alkoxygehalte bedeuten niedrigere Molmassen und somit niedrigere Viskositäten. Dies ist insofern vorteilhaft, da so die Gießfähigkeit des erfindungsgemäßen Silikon-Epoxidharzes in Beschichtungszusammensetzungen verbessert ist im Vergleich zu hochmolekularen Harzkörpern.

Bei dem cycloaliphatischen oder aromatischen Epoxidharz kann es sich um ein Epoxidgruppen aufweisendes organisches Harz unterschiedlichster Molekulargewichtsverteilung der allgemeinen Formeln (X1), (X2), wobei m = 1 - 20 sein kann, handeln.

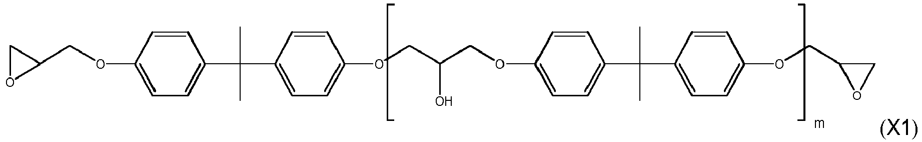

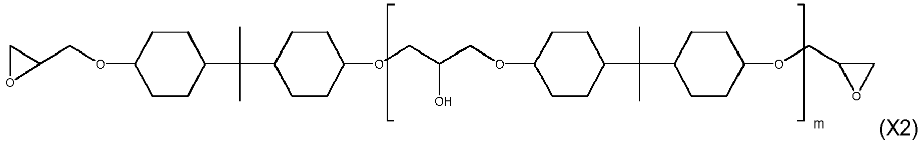

Bevorzugte Epoxidharze sind cycloaliphatische oder aromatische Di- oder Polyether. Besonders bevorzugt sind zwei Epoxidgruppen pro Molekül aufweisende Epoxidharze, die sich von Bisphenol A , d.h. BPA, oder hydriertem Bisphenol A ableiten. Ein besonders bevorzugtes Epoxidharz ist hydrierter BPA-Diglycidylether. Entsprechende Verbindungen sind z.B. als Handelsprodukte, wie ipox ER 15 der Firma ipox, Eponex Resin 1510 der Firma Momentive oder Epalloy 5000, Epalloy 5001 der Firma CVC Thermoset Specialties kommerziell erhältlich. Als aromatische Epoxidharze können z.B. Harze der Firma Momentive, hier stellvertretend genannt Epikote 1001, Epikote 1007 oder von Dow Chemical z.B D.E.R 331, verwendet werden.

Die Umsetzung von Epoxidharz und Silikonharz kann wie folgt erfolgen: Bevorzugt wird die Reaktion durchgeführt bei Temperaturen von 150 bis 200 °C, über einen Zeitraum von 3 bis 10 Stunden unter Zuhilfenahme von geeigneten Umesterungskatalysatoren, wie z. B. Zirconaten (Zr(OR)₄), Titanaten (Ti(OR)₄) oder analogen Aluminiumverbindungen (Al(OR)₃) mit R = linearer oder verzweigter Alkylrest mit 1 bis 8 C-Atomen, bzw. sauren oder basischen Katalaysatoren. Bevorzugt erfolgt weiterhin im Falle des Einsatzes von Diglycidverbindungen die Umsetzung von Silikonharz mit der primären oder sekundären Hydroxylgruppe aus dem Epoxidharz im molaren Verhältnis von 30 - 50 Mol.-% bezogen auf die anwesenden Komponenten.

Nachfolgend werden die nicht umgesetzten Oxirangruppen des Epoxidharzes mit einer ungesättigten Carbonsäure umgesetzt. Unter ungesättigten Carbonsäuren sind dabei Doppel- und/oder Dreifachbindungen aufweisende Monocarbonsäuren zu verstehen. Bevorzugt sind Doppelbindungen aufweisende Monocarbonsäuren. Ganz besonders bevorzugt sind Acrylsäure und Methacrylsäure.

Diese Umsetzung erfolgt bevorzugt bei erhöhten Temperaturen und in Gegenwart eines Übergangsmetallkatalysators, bevorzugt bei Temperaturen von 50 bis 150 °C und in Gegenwart von geeigneten Katalysatoren, ausgewählt unter Säuren, Lewis-Säuren, Basen oder Lewis-Basen, wie z.B. Chrom(III)-Carboxylate, wobei der Carboxylatrest linear oder verzweigt sein kann und bis zu 8 C-Atome aufweist.

Das bei der Reaktion entstehende Silikon-Epoxidharz ist aufgrund der eingefügten Doppel- bzw. Dreifachbindungen strahlungshärtbar.

Bevorzugte erfindungsgemäße strahlungshärtende Silikon-Epoxidharze lassen sich unter der nachfolgenden dargestellten Formel (II) subsummieren, 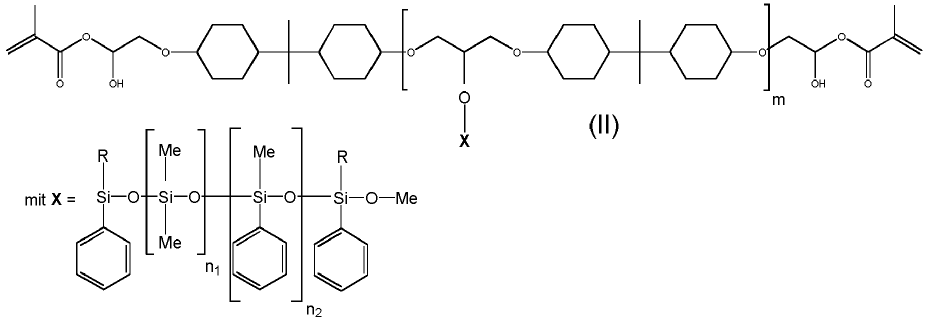 wobei R lineare oder verzweigte Alkylreste mit 1 bis 18 C-Atomen sind und die Summe n aus n₁ + n₂ zwischen 4 bis 70 liegt mit m = 1 - 20.

Die erfindungsgemäßen strahlungshärtenden Silikon-Epoxidharze eignen sich gut für die Herstellung strahlungshärtender Beschichtungszusammensetzungen. Gegenstand der vorliegenden Erfindung sind somit auch Beschichtungszusammensetzungen, umfassend ein erfindungsgemäßes, strahlungshärtbares Silikon-Epoxidharz.

Vorteilhaft weist die Beschichtungszusammensetzung noch weitere Bestandteile auf. Bevorzugt weist die Beschichtungszusammensetzung mindestens ein Lösemittel ausgewählt aus der Gruppe der Ester, Ketone, Aromaten und Alkohole auf. Die erfindungsgemäße Beschichtungszusammensetzung weist das Lösemittel bevorzugt in Gewichtsprozentanteilen von 10 - 50 Gew.-% bezogen auf die Gesamtmasse der Beschichtungszusammensetzung. Besonders bevorzugt sind die Lösemittel 1-Methoxy-2-propylacetat, Butanon-2, Aceton, Butylacetat, Ethyllactat.

Weiter bevorzugt weist sie mindestens einen radikalbildenden Photoinitiator auf. Ein bevorzugt einsetzbarer Photoinitiator ist Diphenyl(2,4,6-trimethylbenzoyl)phosphinoxid, CAS Reg. Nr. 75980-60-8.

Die erfindungsgemäßen Silikon-Epoxidharze und die erfindungsgemäßen Beschichtungszusammensetzungen eignen sich für eine Vielzahl von Anwendungen. Insbesondere eignen sich die erfindungsgemäßen Silikon-Epoxidharze zur Erstellung von Schutz- oder Dielektrikumsschichten in Halbleiterelementen. Dort können sie insbesondere vor mechanischer, chemischer und/oder thermischer Einwirkung sowie Wechselwirkung mit weiteren Schichten und/oder der Atmosphäre Schutz vermitteln.

### Verwendete Methoden:

### Spektroskopische Analysen:

Die Aufnahme und Interpretation der NMR-Spektren ist dem Fachmann bekannt. Als Referenz sei das Buch "NMR Spectra of Polymers and Polymer Additives", A. Brandolini und D. Hills, 2000, Marcel Dekker, Inc. angeführt. Die Spektren wurden mit einem Bruker Spectrospin Spektrometer bei Raumtemperatur aufgenommen, die Messfrequenz betrug bei der Aufnahme der Protonenspektren 399,9 MHz. Es wurden zur Lösung der Silikonverbindungen geeignete deuterierte Lösungsmittel wie Deuterochloroform bzw. Aceton-d₆ (Sigma-Aldrich) verwendet. Dem vom nicht deuterierten Anteil des deuterierten Lösemittel hervorgerufenen ¹H-NMR-Signal wird eine chemische Verschiebung von 2,04 ppm bei Deutero-Aceton bzw. 7,24 ppm bei Deutero-Chlorform zugeordnet. Damit wurde die Frequenzachse für das gesamte Spektrum eindeutig festgelegt. Die Bestimmung des Methoxywertes erfolgte dabei unter Verwendung des Signals der Methylprotonen der Methoxygruppe bei 3,4 ppm.

### Bestimmung des Doppelbindungsgehaltes mittels Iodzahl

Der Gehalt an C=C-Mehrfachbindungen lässt sich zum Beispiel durch die Bestimmung der Iodzahl ermitteln. Eine gängige Methode ist die Bestimmung der Iodzahl nach Hanus (Methode DGF C-V 11 a (53) der Deutschen Gesellschaft für Fettwissenschaft e.V.). Die im Folgenden angegebenen Werte beruhen auf dieser Methode.

### Bestimmung Epoxid-Äquivalentgewichtes

Der Epoxy-Ring wird im streng nichtwässrigen Medium mit Salzsäure unter Bildung einer C-Cl und einer C-OH Funktion geöffnet. Der Überschuss an Salzsäure wird unter Berücksichtigung eines parallel angesetzten Blindwertes mit ethanolischer Kalilauge zurück titriert. Die beschriebene Methode dient der quantitativen Bestimmung von Epoxy-Sauerstoff, z.B. in Epoxy-funktionellen Siloxanen und in Abwesenheit von sauren Verbindungen.

Die Angabe des Epoxid-Äquivalentgewichtes ermöglicht die Berechnung der notwendigen Menge an ungesättigter Carbonsäure, beispielsweise Acrylsäure, welche schließlich die strahlungshärtbaren Gruppen in dem erfindungsgemäßen Silikon-Epoxidharz bilden.

Der Anteil an Epoxy-Funktionen im intermediären Silikon-Epoxidharz, der nachfolgend durch Ringöffnung der Oxirangruppen mittels ungesättigter Carbonsäure, beispielsweise Acrylsäure, in entsprechende Acrylat-Funktionen überführt wird, beeinflußt die Art und Dichte der Vernetzung des erfindungsgemäßen, strahlungshärtbaren Silikon-Epoxidharz, somit dessen finale Materialeigenschaften.

### Bestimmung der Säurezahl

Die Bestimmung der Säurezahl erfolgt in Anlehnung an ISO 3682 bzw, ASTM D 974 DIN EN ISO 2114, wobei die Probe wird in einem geeigneten Lösungsmittel gelöst und die anwesenden Säuren mit Kalilauge titriert wurde. Die Säurezahl (SZ) gibt die Anzahl mg KOH an, die notwendig ist, um die in 1g Produkt enthaltenen freien Säuren zu neutralisieren.

### Viskosität

Die Bestimmung der Viskositäten erfolgte mittels eines Spindelviskosimeter Typ Brookfield LV-DV-I+. Brookfield-Viskosimeter sind Rotationsviskosimeter mit definierten Spindelsätzen als Rotationskörper. Bei den verwendeten Rotationskörper n handelte es sich um einen LV-Spindelsatz. Aufgrund der Temperaturanhängigkeit der Viskosität wurde die Temperaturen von Viskosimeter und Messflüssigkeit während der Messung auf +/- 0,5 °C genau konstant gehalten. Weitere verwendete Materialien neben dem LV-Spindelsatz waren ein thermostatisierbares Wasserbad, ein Thermometer 0 - 100°C (Skalenteile 1°C bzw. kleiner) und ein Zeitmessgerät (Skalenwerte nicht größer als 0,1 Sekunden). Zur Messung wurden 100 ml der Probe in eine Weithalsflasche gefüllt; temperiert und luftblasenfrei vermessen, nachdem eine vorherige Kalibrierung erfolgt war. Zur Bestimmung der Viskosität wurde das Viskosimeter so zur Probe positioniert, dass die Spindel bis zur Markierung im Produkt eintaucht. Die Messung wird mit Hilfe der Starttaste ausgelöst, wobei darauf geachtet wurde, dass die Messung im günstigen Messbereich von 50% (+/- 20%) des maximal messbaren Drehmoments erfolgte. Das Ergebnis der Messung wurde am Display des Viskosimeters in mPas ausgegeben, wobei die Division durch die Dichte (g/ml) die Viskosität in mm2/s liefert.

### Bestimmung der relativen Molmasse einer Polymerprobe mittels Gelpermeationschromotographie (GPC):

Die gelpermeationschromatographischen Analysen (GPC) erfolgten mit einem Gerät Typ 1100 der Firma Hewlett-Packard unter Verwendung einer SDV- Säulenkombination (1000/10000 A, je 65 cm, Innendurchmesser 0,8 cm, Temperatur 30°C), THF als mobiler Phase mit einer Flussrate von 1ml/min und einem RI-Detektor (Hewlett-Packard). Die Kalibrierung des Systems erfolgte gegen einen Polystyrolstandard im Bereich von 162 - 2.520.000 g/mol.

### Inerte Arbeitsweise

Unter "inerten" Bedingungen wird verstanden, dass der Gasraum innerhalb der Apparatur mit einem Inertgas, z.B. Stickstoff oder Argon gefüllt ist. Dies wird durch das Fluten der Apparatur erreicht, wobei ein leichter Inertgasstrom die Inertisierung gewährleistet.

### Ausführungsbeispiele

### A1.1 Synthese eines alkoxyfunktionellen Methyl-/Phenyl Silikon-Intermediates

In einem Reaktionskessel wurden unter inerten Bedingungen 303 g Phenyltrimethoxysilan, 18 g Methanol und 51 g Silikoncyclengemisch, umfassend Cyclotetra-dimethylsilioxan, Cyclopentadimethylsiloxan, sowie 1000 ppm Salzsäure (37,5 %) eingefüllt und auf 60 °C unter Stickstoffzufuhr erwärmt. Es wurde 27 g Wasser zugetropft und 3 Stunden bei 80 °C unter Rückfluss gehalten. Anschließend wurde das entstandene Methanol destillativ entfernt.

Es wurden folgende Kennzahlen erhalten:

| | |
|---|---|
| Feststoffgehalt: | 100 Gew.-% |
| Methoxygehalt: | 16,5 Gew.-% |
| Viskosität: | 250 mPa*s |
| Molekulargewicht: | Mn 890 g/mol / Mw 1193 g/mol / Polydispersität 1,34 |

### A1.2 Synthese eines Silikon-Epoxy-Acrylat Harzes

In einem Reaktionskessel wurden unter inerten Bedingungen 129 g des unter A1.1 hergestellten methoxyfunktionellen Methyl-/Phenyl Silikon-Intermediates, 129 g IPOX ER 15 (hydrierter BPA-diglycidylether der Firma ipox® chemicals) eingefüllt und auf 180 °C unter Stickstoffzufuhr mit einem aufgesetzten Kolonnenaufsatz zur Abscheidung des während der Reaktion entstehenden Alkohols erhitzt. Nach einer Reaktionszeit von 7 Stunden wurde auf 80 °C abgekühlt. Das EpoxidÄquivalentgewicht liegt bei 486 g/mol.

Es werden im Weiteren unter inerten Bedingungen 37 g Acrylsäure sowie 500 ppm Chrom (III) 2-ethylhexanoat zugegeben. Die Temperatur wird auf 100 °C erhöht und 4 Stunden gehalten.

Es wurden folgende Kennzahlen erhalten:

| | |
|---|---|
| Feststoffgehalt: | 100 Gew.-% |
| Viskosität: | 60.000 mPa*s |
| DB-Äquivalent: | 570 g/mol (Doppelbindungsäquivalentgewicht) |
| Säurezahl: | <2 mg KOH/g |

### A1.3 Herstellung einer Beschichtungszusammensetzung

Für die Beschichtung mittels Aufschleudern (Spin Coating) wurden 3 g des Silikon-Epoxy-Acrylat Harz aus A1.2, 5 g 1-Methoxy-2-propylacetat und 0,3 g Diphenyl(2,4,6-trimethylbenzoyl)phosphinoxid bei Raumtemperatur zusammengebracht.

### A1.4 Herstellung einer strukturierten Ätzstoppschicht

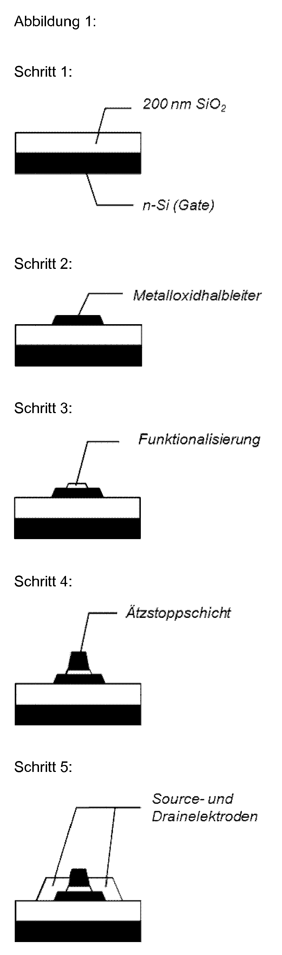

100 µL der unter A1.3 hergestellten Formulierung wurde mittels Spin Coating (2000 rpm, 30 s) auf das 2 cm x 2 cm Substrat aufgebracht. Vor dem Belichten erfolgte ein Vortempern (Prebake) bei 150°C für 1 min auf der Heizplatte. Danach wurde UV-Licht 365 nm, der i-Linie einer Hg-Dampflampe durch eine Fotomaske auf das Substrat 50 s gestrahlt und es kam zu einer radikalischen Vernetzung an freien Stellen (Negativlack). Um diese Bereiche noch stärker zu vernetzen, erfolgte ein Nachtempern der Probe (Postbake) bei 150°C für 40 s. Die unvernetzten Bereiche ließen sich mit einem Lösungsmittel abspülen (Abb. 1 Schritt 4). Vorliegend wurde Aceton verwendet. Damit das Silikon-Epoxidharz resistent gegenüber der Ätzlösung für die Metallkontakte ist, wurde die Schicht bei höherer Temperatur 250°C für 30 min ausgehärtet (Hardbake). Es zeigte sich, dass das so behandelte Silikon-Epoxidharz den darunterliegenden Halbleiter über längere Zeit gegenüber Säuren schützt, z.B. 1 M Oxalsäure für mindestens 10 min bei 40°C, eine Mischung aus 80%-ger H₃PO₄ und 30%-gen H₂O₂ im Volumenverhältnis 50%:50% für mindestens 5 min bei Raumtemperatur, oder eine Mischung aus 80%-ger H₃PO₄ und 70%-ger HNO₃ und 99%-ger CH₃COOH und H₂O im Volumenverhältnis 70%:3%:3%:24% für mindestens 5 min bei Raumtemperatur.

### B1. Verwendung als Ätzstoppschicht

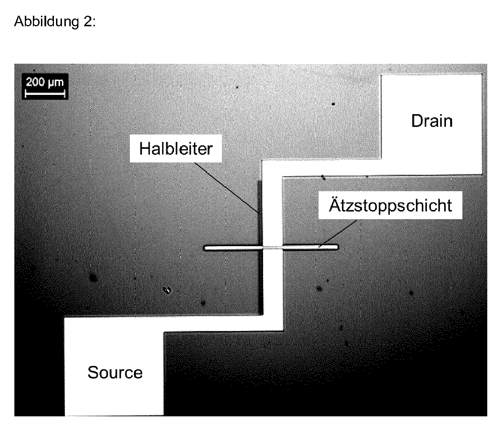

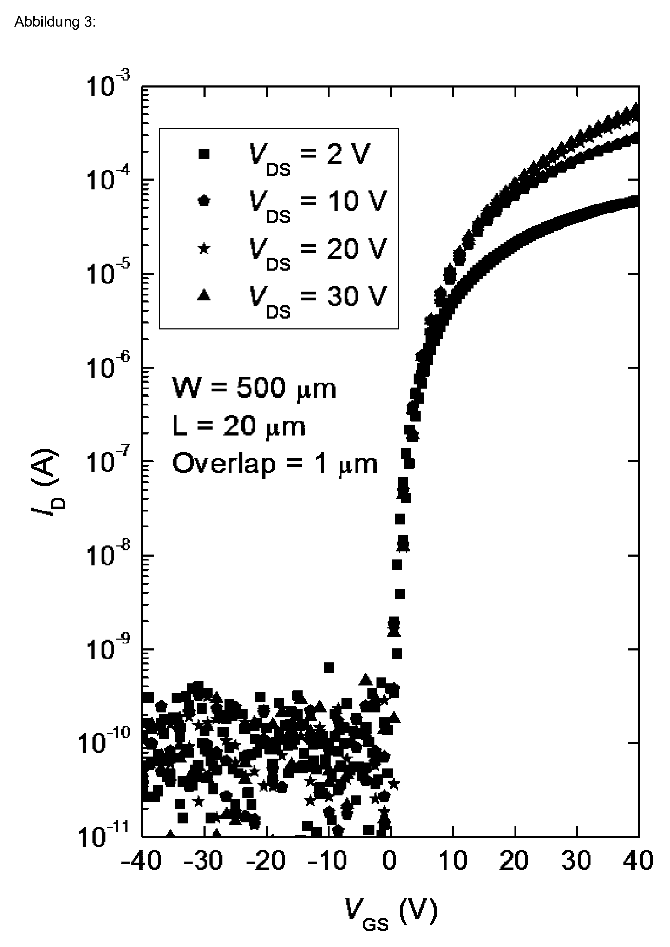

Zu Beginn wurde ein Metalloxidhalbleiter auf einem Siliciumsubstrat mit einer 200 nm Schicht aus thermisch oxidiertem Siliciumdioxid (Abb. 1 Schritt 1) hergestellt. Dafür wird ein Indiumoxoalkoxid mittels Spin Coating abgeschieden und auf einer Heizplatte konvertiert. Die Schicht wurde an definierten Stellen geätzt. Dafür wurde ein kommerziell erhältlicher Fotolack, der beispielsweise empfindlich ist im Wellenlängenbereich einer Hg-Dampflampe, den sogenannten g-, h- und i-Linien, wie z. B. AZ1514H der Clariant AG, aufgetragen und mittels UV-Lithographie strukturiert. Das Ätzen erfolgte in 1 M Oxalsäure (Abb. 1 Schritt 2). Des Weiteren wurde eine Funktionalisierungsschicht aus Yttriumoxoalkoxid mittels Spin Coating aufgebracht, zur oxidhaltigen Schicht auf Heizplatte konvertiert und auf gleiche Weise strukturiert (Abb. 1 Schritt 3). Anschließend wurde Silikon-Epoxy-Acrylat Harz als Ätzstoppschicht nach A1.4 aufgebracht und so strukturiert, dass der spätere Kanalbereich des Transistors geschützt wird, so dass beim Ätzen der Metallkontakte für Source und Drain, der Halbleiter nicht beschädigt wurde (Abb. 1 Schritt 4). Nach dem Aushärten der Ätzstoppschicht wurde per Kathodenzerstäubung (Sputtern) eine Metallschicht (z.B. 250 nm Al oder 150 nm Mo) ganzflächig auf dem Substrat abgeschieden. Zum Definieren der Kontakte für die Source- und Drainelektroden wurde eine Schicht mit dem kommerziell erhältlichen Fotolack AZ1514H aufgetragen und durch UV-Licht mit einer Wellenlänge von 365 nm,der i-Linie einer Hg-Dampflampe, strukturiert. Anschließend wurde das Metall mit einer Mischung aus verschiedenen Säuren z.B. eine Mischung aus 80%-ger H₃PO₄ und 30%-gen H₂O₂ im Volumenverhältnis 50%:50% für 5 min bei Raumtemperatur, oder eine Mischung aus 80%-ger H₃PO₄ und 70%-ger HNO₃ und 99%-ger CH₃COOH und H₂O im Volumenverhältnis 70%:3%:3%:24% für 5 min bei Raumtemperatur geätzt (Abb. 1 Schritt 5 und Abb. 2). Der fertige TFT wurde unter Stickstoffatmosphäre elektrisch charakterisiert (Transferkurven siehe Abb. 3).

## Patentansprüche

1. Strahlungshärtbares Silikon-Epoxidharz, herstellbar durch
a. Polykondensation mindestens eines alkoxyfunktionellen Silikonharzes mit mindestens einem Teil der primären oder sekundären Hydroxylgruppen eines cycloaliphatischen oder aromatischen Epoxidharzes und
b. nachfolgende Umsetzung nicht umgesetzter Oxirangruppen von an das Silikonharz angebundenem Epoxidharz mit mindestens einer ungesättigten Carbonsäure.

2. Silikon-Epoxidharz nach Anspruch 1, **dadurch gekennzeichnet, dass** das alkoxyfunktionelle Silikonharz die Formel 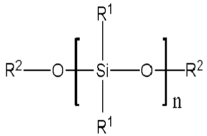
mit R¹ = Alkyl-, Aryl-, Alkoxy-,HO-, (R³)₃SiO-,
R² = H-, Alkyl-, Aryl-,
R³ = Alkyl-, Aryl-, Alkoxy-, HO-
und n > 1 aufweist.

3. Silikon-Epoxidharz nach Anspruch 2, **dadurch gekennzeichnet, dass** n = 4 - 70.

4. Silikon-Epoxidharz nach Anspruch 3, **dadurch gekennzeichnet, dass** es ein zahlenmittleres Molekulargewicht Mₙ von 300 - 5100 g/mol aufweist.

5. Silikon-Epoxidharz nach einem der Ansprüche 2 - 4, **dadurch gekennzeichnet, dass** R¹ =-CH₃, -C₆H₅ und R² = -CH₃, -C₂H₅ ist.

6. Silikon-Epoxidharz nach einem der Ansprüche 1 - 5, **dadurch gekennzeichnet, dass** der Alkoxygehalt des Silikonharzes 5 - 30 Gew.-% beträgt.

7. Silikon-Epoxidharz nach einem der Ansprüche 1 - 6, **dadurch gekennzeichnet, dass** das Epoxidharz kern-hydrierter BPA-Diglycidylether ist.

8. Silikon-Epoxidharz nach einem der Ansprüche 1 - 7, **dadurch gekennzeichnet, dass** die Carbonsäure Acrylsäure oder Methacrylsäure ist.

9. Beschichtungszusammensetzung, umfassend ein Silikon-Epoxidharz nach einem der Ansprüche 1 - 8.

10. Beschichtungszusammensetzung nach Anspruch 9, umfassend mindestens ein Lösemittel ausgewählt aus der Gruppe der Ester, Ketone, Aromaten und Alkohole.

11. Beschichtungszusammensetzung nach Anspruch 9 oder 10, umfassend mindestens einen radikalbildenden Photoinitiator.

12. Verwendung einer Beschichtungszusammensetzung nach einem der Ansprüche 9 - 11 zur Erstellung von Schutz- oder Dielektrilumsschichten in Halbleiterelementen.
